# EUROPÄISCHE PATENTSCHRIFT

(11) **EP 0 874 226 B1**
(45) Veröffentlichungstag und Bekanntmachung des Hinweises auf die Patenterteilung: **10.11.2004**
(21) Anmeldenummer: 98106125.2
(22) Anmeldetag: 03.04.1998
(51) Int. Cl.: G01F 7/00

(54) **Verbundwasserzähler**
Compound water meter
Compteur d'eau composé

(30) Priorität: 18.04.1997 DE 19717725
(43) Veröffentlichungstag der Anmeldung: 28.10.1998
(73) Patentinhaber: Sensus Metering Systems GmbH Hannover, 30880 Laatzen (DE)
(72) Erfinder: Beddies, Uwe, 30966 Hemmingen (DE)
(74) Vertreter: Seewald, Jürgen, Dipl.-Ing.

(56) Entgegenhaltungen:
- EP-A- 0 718 603
- WO-A-81/03700
- DE-A- 3 429 007

## Beschreibung

Die vorliegende Erfindung betrifft einen Verbundwasserzähler mit einem Hauptzähler-Meßeinsatz, in dem ein Flügelrad drehbar gelagert ist, einem wasserdicht mit dem Hauptzähler-Meßeinsatz verbundenen und in Strömungsrichtung hinter diesem angeordneten Umschaltventil-Einsatz, wobei der Hauptzähler-Meßeinsatz und der Umschaltventil-Einsatz hängend an einem Zählergehäuse-Deckel angeordnet sind, der eine obere Gehäuseöffnung verschließt.

Verbundwasserzähler werden in Fällen angewendet, in denen der Meßbereich eines einfachen Zählers nicht ausreicht, um alle auftretenden Durchflüsse zu erfassen. Sie bestehen aus einem Großwasserzähler als Hauptzähler, einem Hauswasserzähler als Nebenzähler sowie einem Umschaltventil. Das Umschaltventil steuert die Zu- und Abschaltung des Hauptzählers, der in aller Regel als Woltmannzähler ausgeführt ist und die Volumenmessung nur bei größeren, vorbestimmten Durchflüssen zusätzlich zum Nebenzähler übernimmt.

Es sind Verbundwasserzähler bekannt, bei denen die Umschaltventile als gewichtsbelastete Schwenkklappen ausgebildet sind (z.B. US 41 00 800), die beim Öffnen den Durchströmquerschnitt völlig freigeben. Die Klappen und der mit ihr verbundene Ventilteller schwenkt dabei um einen seitlich vom Durchströmquerschnitt liegenden Drehpunkt. Der Nachteil dieser Anordnung liegt darin, daß für das Schwenken der Klappe viel Platz benötigt wird, was zu langen und schweren Verbundwasserzählern führt.

Weiterhin sind Verbundwasserzähler der eingangs genannten Art beispielsweise aus DE 34 29 007 A1, DE 37 32 703 A1, DE 37 40 531 A1 oder DE 39 24 147 C1 bekannt. Bei diesen Zählern ist das Verschlußglied des Umschaltventils translatorisch auf einer zentral in Strömungsrichtung liegenden Achse geführt und mit einer Feder belastet, die es entgegen der Strömungsrichtung in Anlage an einen Ventilsitz drückt. Ab einer vorbestimmten Durchflußmenge hebt das Verschlußglied unter Überwindung der Federkraft vom Ventilsitz ab und verschiebt sich in Strömungsrichtung. Dadurch wird ein ringförmiger Durchströmquerschnitt freigegeben.

Derartig aufgebaute Umschaltventile haben gegenüber dem oben genannten Stand der Technik einen geringeren Platzbedarf, bauen aber zusammen mit dem vorgeschalteten Hauptzähler-Meßeinsatz immer noch recht lang, was sich negativ auf die Länge und das Gewicht des Verbundwasserzählers niederschlägt. Diese Hauptzähler-Meßeinsätze bekannter Verbundwasserzähler sind generell so aufgebaut, daß in ihrem Meßraum das Flügelrad zwischen zwei über Stege im Meßraum gehalterte Naben drehbar gelagert ist. Dabei erfolgt in der auf der stromab liegenden Seite des Flügelrades angeordneten Nabe ein mechanischer Abgriff (z. B. Schneckenrad-Ritzel) der Drehzahl des Flügelrades, der über eine Welle zum Zählwerk übertragen wird.

Aufgabe der vorliegenden Erfindung ist es, eine Lösung zur Verfügung zu stellen, mit der bei Verbundwasserzählern der eingangs genannten Art eine kürzere Baulänge und damit eine kompaktere Konstruktion realisiert werden kann.

Erfindungsgemäß wird diese Aufgabe mittels eines Verbundwasserzählers der eingangs genannten Art gelöst, der durch folgende Merkmale gekannzeichnet ist:
- Das Flügelrad ist auf seiner stromauf liegenden Seite, wie bekannt, in einer an Stegen gehalterten Nabe gelagert;
- im Hohlraum dieser Nabe ist eine an sich bekannte elektronische Abtasteinrichtung zur Erfassung der Drehzahl des Flügelrades angeordnet, die über elektrische Leiter mit einem elektronischen Zählwerk verbunden ist;
- das Flügelrad ist auf seiner stromab liegenden Seite an dem Umschaltventil-Einsatz gelagert, welcher die nach dem Stand der Technik eingesetzte Nabe als Lagerstelle ersetzt.

Die Erfindung geht damit von der grundlegenden Überlegung aus, den mechanischen Abgriff der Drehzahl des Flügelrades durch einen an sich von Einzelzählern her bekannten elektronischen Abgriff zu ersetzen und diesen in der stromauf vom Flügelrad vorgesehenen Nabe anzuordnen. Die nach dem Stand der Technik stromab vom Flügelrad vorgesehenen Nabe kann dann entfallen, wenn der ohnehin erforderliche Umschaltventil-Einsatz zur stromabseitigen Lagerung des Flügelrades herangezogen und dicht hinter dem Flügelrad positioniert wird. Die Länge der Kombination Hauptzähler-Meßeinsatz/Umschaltventil-Einsatz verkürzt sich somit zumindest um die Länge der ursprünglich stromab vom Flügelrad vorgesehenen Nabe.

Eine weitere, beträchtliche Baulängenverringerung kann erreicht werden, wenn in sehr vorteilhafter Ausgestaltung der vorliegenden Erfindung ein völlig neuartiges Umschaltventil zum Einsatz kommt. Dieses besitzt ein in Richtung Schließstellung federbelastetes Verschlußglied, welches als geteilte Klappe ausgebildet ist, deren beiden Flügel an einer in ihrer Teilungsebene liegenden Schwenkachse scharnierartig miteinander verbunden sind, wobei die Klappe auf ihrer stromauf liegenden Seite zumindest im konstruktiv bedingt Spalten aufweisenden Bereich der Schwenkachse durch eine Flachdichtung abgedeckt ist.

Dadurch, daß das Verschlußglied des Umschaltventils geteilt ausgeführt ist und beide Flügel um eine in der Teilungsebene lie^{g}ende gemeinsame Achse schwenken, wird der Durchfluß durch den Hauptzähler freigegeben, ohne daß das Verschlußglied translatorisch bewegt oder völlig herausgeschwenkt werden muß. Beide Flügel beanspruchen in geöffneter Position weniger Platz als die bereits bekannten Umschaltventil-Lösungen. Dieser geringere Platzbedarf kann für eine weitere Verkürzung der Baulänge eines Verbundwasserzählers genutzt werden.

Aufgrund der erfindungsgemäßen elektronischen Abtastung der Drehzahl des Flügelrades entfällt sowohl die Übertragungswelle als auch das Meßwerk. Der dadurch oberhalb des Hauptzähler-Meßraums freiwerdende Raum im Hauptzähler-Meßeinsatz kann in vorteilhafter Weise dazu benutzt werden, hier den Nebenzähler anzuordnen. Durch die Kombination von Hauptzähler-Meßeinsatz mit integriertem Nebenzähler und oben beschriebenem, neuartigem Klappen-Umschaltventil wird eine derart kompakte Bauweise erreicht, daß es möglich wird, die eine Einheit bildende Baugruppe Zählergehäusedeckel/Hauptzähler-Meßeinsatz/Umschaltventil-Einsatz in das Gehäuse eines Einzelzählers einzusetzen.

Das neuartige Klappen-Umschaltventil hat wesentlich geringere Druckverluste als die bekannten Umschaltventile (siehe z. B. DE 37 32 703 A1), bei denen die Verschlußglieder in Offenstellung in der Strömung verbleiben. Beim Klappen-Umschaltventil bleibt das im Verschlußglied zwar auch ständig in der Strömung, aber beim Öffnen der Flügel verringert sich deren angeströmte Fläche, d.h., der Druckverlust wird immer kleiner und ist bei völlig geöffneten Flügeln am geringsten. Der geringe Druckverlust des Klappen-Umschaltventils kann dazu genutzt werden, die Bauhöhe des Verbundwasserzählers zu verringern, um zu einer noch kompakteren Bauweise zu kommen. Das wird in Weiterbildung der vorliegenden Erfindung dadurch erreicht, daß der zwischen dem Einlauf- und Auslaufflansch liegende Zählerbereich bis zu den Flanschunterkanten heruntergezogen und damit der Freiraum zwischen den Anschlußflanschen genutzt wird. Vor und hinter dem Hauptzähler-Meßraum ergibt sich dadurch ein schräger Zu- bzw. Abfluß. Der aus dieser Strömungsführung im Zählergehäuse im Vergleich mit einer geradlinigen Strömungsführung resultierende höhere Druckverlust wird durch den geringen Druckverlust des Klappenumschaltventils kompensiert.

. Eine Verringerung der Bauhöhe eines Verbundwasserzählers kann in einer weiteren Ausführungsform der vorliegenden Erfindung auch auf andere Weise erreicht werden. Bei dieser Lösung wird ebenfalls der Freiraum zwischen den Unterkanten von Einlauf- und Auslaufflansch und der Unterseite des Zählergehäuses genutzt. Besagte Lösung sieht vor, den Hauptzähler-Meßeinsatz nach unten zu verlängern und in den dadurch geschaffenen Raum den Nebenzähler zu integrieren. Bei dieser Variante ist also der Nebenzähler unterhalb des Hauptzähler-Meßraums angeordnet. Sie hat gegenüber der vorstehend beschriebenen Ausführungsform den Vorteil, daß das Wasser geradlinig durch das Gittergehäuse geführt wird. Daraus resultieren geringere Druckverluste.

In weiterer Ausbildung der Erfindung ist auch dem Nebenzähler eine an sich bekannte elektronische Abtasteinrichtung zur Erfassung seiner Drehzahl zugeordnet, von der elektrische Leiter zum elektronischen Zählwerk führen.

Die Erfindung wird nachstehend anhand von zwei Ausführungsbeispielen näher erläutert. In der dazugehörigen Zeichnung zeigt:
- Fig. 1: einen Längsschnitt durch einen Verbundwasserzähler in einer ersten Ausführungsform,
- Fig. 2: einen Längsschnitt durch einen Verbundwasserzähler in einer zweiten Ausführungsform,
- Fig. 3: eine perspektivische Ansicht des Umschaltventil-Einsatzes mit geschlossenem Ventil aus einer stromab liegenden Position,
- Fig. 4: einen Schnitt A-A gemäß Fig. 3,
- Fig. 5: einen Schnitt gemäß Fig. 4 mit geöffnetem Ventil, und
- Fig. 6: eine Einzelheit B gemäß Fig. 3.

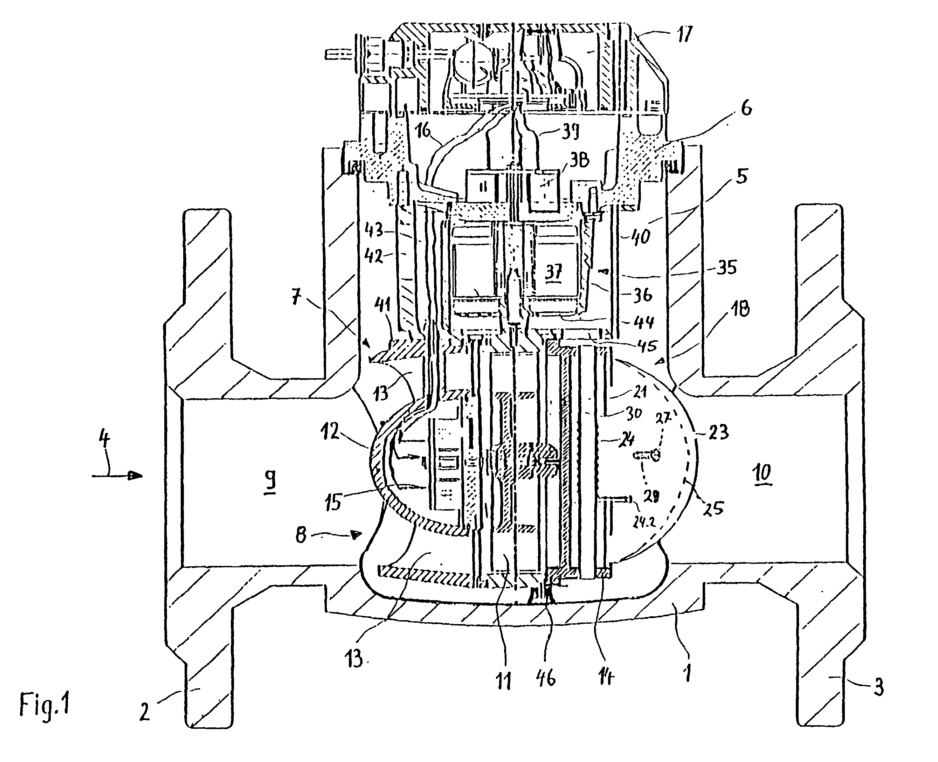

In Fig. 1 ist ein Verbundwasserzähler im Längsschnitt dargestellt. Sein Gehäuse 1 weist einen Einlaufflansch 2 und einen Auslaufflansch 3 zum Anschluß an eine Rohrleitung auf. Die Strömungsrichtung durch das Gehäuse 1 ist durch einen Pfeil 4 angedeutet. Das Gehäuse 1 besitzt eine obere Öffnung 5, die durch einen Deckel 6 verschlossen ist. An diesem Deckel 6 hängt ein Hauptzähler-Meßeinsatz 7, dessen Meßraum 8 in Flucht mit den Wasserführungskanälen 9, 10 des Gehäuses 1 liegt. Die Wasserführungskanäle 9, 10 sind durch eine außen an der Wandung des Meßraums 8 umlaufende Doppellippen-Dichtung 46 wasserdicht voneinander getrennt. Diese Doppellippen-Dichtung 46 drückt sich beim Einschieben des Hauptzähler-Meßeinsatzes 7 in das Gehäuse 1 dicht an dessen Innenwandung an. Die Dichtung 46 und ihre Anordnung etwa in der Mitte des Hauptzähler-Meßeinsatzes 7 ist gegenüber dem Stand der Technik neu. Diese Ausführung hat den Vorteil, daß die mit der Dichtung 46 korrespondierende Innenwandung des Gehäuses 1 nicht als Dichtfläche bearbeitet werden muß.

Im Meßraum 8 ist ein Woltmann-Flügelrad 11 an einer glockenförmigen, stromauf von ihm angeordneten und über Stege 13 gehalterten Nabe 12 und an einem Umschaltventil-Einsatz 14 drehbar gelagert. Der Umschaltventil-Einsatz 14 ist wasserdicht mit dem Hauptzähler-Meßeinsatz 7 verbunden und bildet mit diesem eine Einheit. Im UmschaltventilEinsatz 14 ist ein nicht zum Stand der Technik gehörendes Umschaltventil 18 angeordnet, dessen Aufbau und Funktion daher nachstehend ausführlich beschrieben wird.

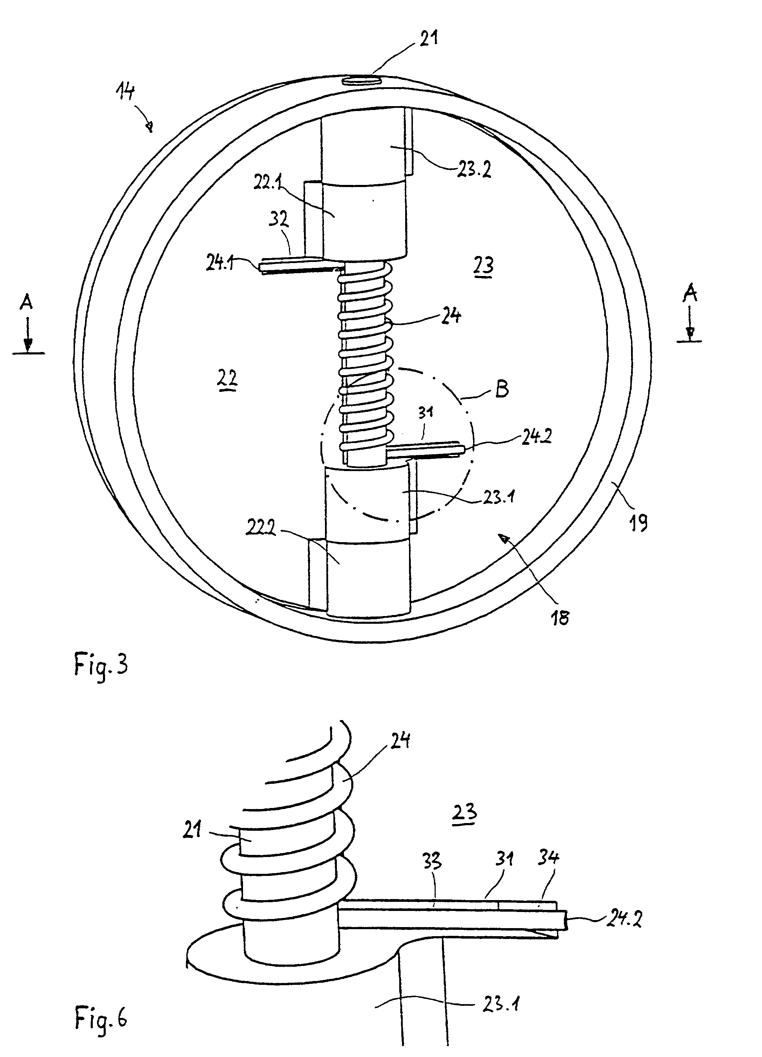

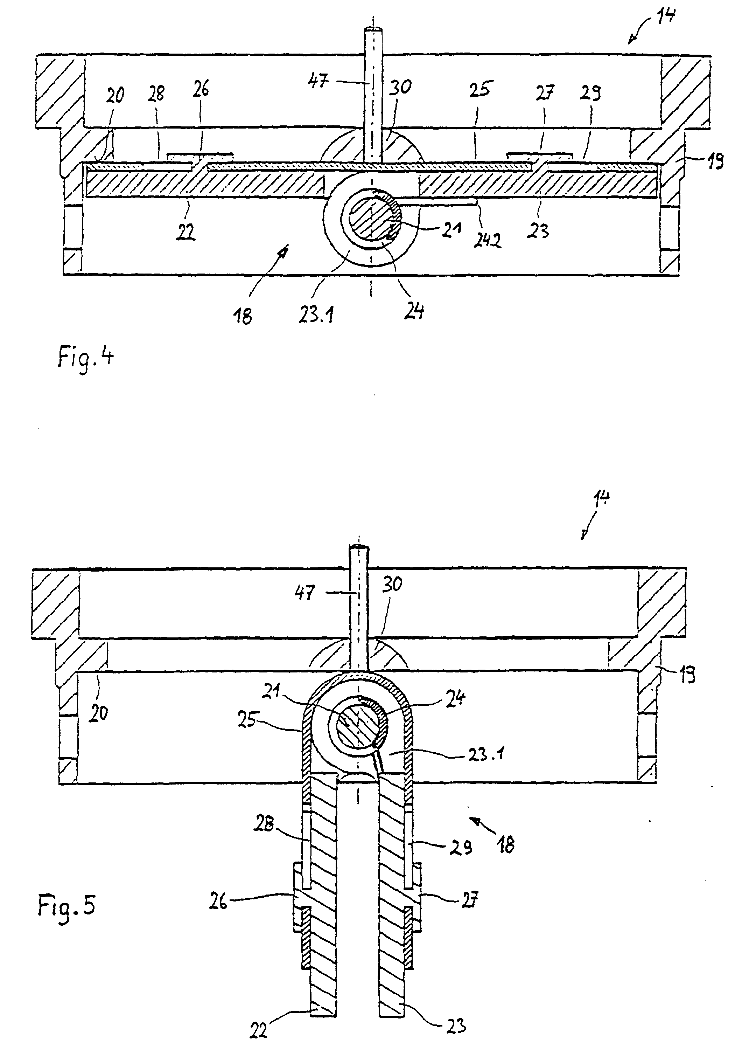

Der Umschaltventil-Einsatz 14 besteht aus einem Gehäuse 19 mit kreisförmigem Durchströmquerschnitt, in dem ein Ventilsitz 20 (Fig. 4, 5) ausgebildet ist. Des weiteren ist im Durchmesser des Gehäuses 19 eine Schwenkachse 21 gelagert, an der zwei Flügel 22, 23 als Verschlußglieder des Umschaltventils 18 angelenkt sind. Dazu sind die Flügel 22, 23 mit Augen 22.1, 22.2 bzw. 23.1, 23.2 versehen, die von der Schwenkachse 21 durchsetzt werden. Wie am besten aus Fig. 3 hervorgeht, liegt die Schwenkachse 21 zwischen den Augen 22.1, 23.2 und 23.1, 22.2 frei. In diesem Bereich ist auf der Schwenkachse 21 eine vorgespannte Spiralfeder 24 angeordnet, deren Federenden 24.1, 24.2 auf den Flügeln 22, 23 aufliegen und diese in Schließrichtung beaufschlagen. Die Flügel 22, 23 liegen daher bei geringen Durchflüssen, bei denen der Hauptzähler nicht freigegeben werden soll, am Ventilsitz 20 an, wie aus Fig. 4 hervorgeht. Um einen dichten Sitz der Flügel 22, 23 am Ventilsitz 20 zu gewährleisten, ist auf der stromauf liegenden Seite der Flügel 22, 23 eine Flachdichtung 25 angeordnet, die bei geschlossenen Flügeln 22, 23 zwischen diesen und dem Ventilsitz 20 eingeklemmt wird.

Die Flachdichtung 25 ist formschlüssig auf den Flügeln 22, 23 festgelegt, die dazu Noppen 26, 27 (Fig. 4 und Fig. 5) aufweist. Im Bereich dieser Noppen 26, 27 ist die Flachdichtung 25 mit Langlöchern 28, 29 versehen, die sich auf einer gedachten Linie lotrecht zur Schwenkachse 21 erstrecken. Zur Befestigung der Flachdichtung 25 werden die Langlöcher 28, 29 etwas quer zu ihrer Längserstreckung gedehnt, so daß sie über die breiteren Köpfe der Noppen 26, 27 passen, hinter denen die Flachdichtung 25 nach ihrem Passieren "einrastet".

Beim Öffnen der Flügel 22, 23 wird die Flachdichtung 25 um die Schwenkachse 21 bzw. die Augen 22.1, 22.2, 23.1, 23.2 gebogen. Damit einher geht eine Vergrößerung der von der Flachdichtung 25 bei geschlossenem Ventil abgedeckten Fläche. Dies würde bei einer starren Festlegung der Flachdichtung 25 auf den Flügeln 22, 23 zu einer Dehnung der Flachdichtung 25 führen. Ermüdungsbrüche der Flachdichtung 25 wären dann nur eine Frage der Zeit. Zudem müßte der den Hauptzähler durchströmende Wasservolumenstrom in diesem Falle auch die Rückhaltekräfte der Flachdichtung 25 auf die Flügel 22, 23 überwinden. Diese Nachteile werden durch die Führung der Flachdichtung 25 in ihren Langlöchern 28, 29 vermieden. Diese kann, auf den Noppen 26, 27 geführt, von den Rändern der Flügel 22, 23 weggleiten, wodurch die oben angesprochene Flächenvergrößerung kompensiert wird. In Fig. 5 ist dieser Zustand an dem extremen Beispiel völlig geöffneter Flügel 22, 23 dargestellt.

Insbesondere aus der Darstellung gemäß Fig. 4 ist ableitbar, daß das aus den beiden Flügeln 22, 23, dem Ventilsitz 20, der Schwenkachse 21, der Flachdichtung 25 und der Feder 24 bestehende Umschaltventil 18 im Falle einer Rückwärtsströmung auch hervorragend als Rückschlagventil geeignet ist. Zur Absicherung des in diesem Falle problematischen Bereichs der Schwenkachse 21, in dem konstruktiv bedingt Spalte vorhanden sind, ist, in Richtung der Rückströmung gesehen, hinter der Schwenkachse 21 ein Steg 30 angeordnet, an der die Flachdichtung 25 anliegt. Sie kann daher z. B. bei einem Druckschlag nicht nach hinten weggedrückt werden. In den Steg 30 ist ein Lagerzapfen 47 für das Flügelrad 11 eingelassen.

Beim Öffnen der Flügel 22, 23 wird die vorgespannte Feder 24, weiter gespannt, d.h., mit zunehmendem Öffnungswinkel der Flügel 22, 23 vergrößern sich die aus der Spiralfeder 24 auf die Flügel 22, 23 in Schließrichtung wirkenden Momente. Dieser Effekt ist unerwünscht, da die Flügel 22, 23 zur Erzielung geringer Druckverluste möglichst weit geöffnet sein sollen. Aus diesem Grunde sind die auf den Flügeln 22, 23 aufliegenden Federenden 24.1, 24.2 jeweils in einer Kulisse 31, 32 geführt. Diese Kulissen 31, 32 sind als sich in radialer Richtung erstreckende, in die Flügel 22 bzw. 23 eingebrachten Nuten ausgebildet. Der Boden 33 dieser Nuten ist somit gegenüber der Oberfläche der Flügel 22, 23 zurückversetzt. Im Übergang von der Oberfläche der Flügel 22, 23 zum Nutenboden 33 ist eine zur Schwenkachse 21 nach innen geneigte schiefe Ebene 34 vorgesehen. Diese Ausbildung geht im Detail am besten aus Fig. 6 hervor, die die Zuordnung zwischen dem Federende 24.2 und der Kulisse 31 zeigt. Die nachfolgenden Ausführungen beziehen sich auf diese Paarung. Für die Paarung Federende 24.1 und Kulisse 32 gilt analog das gleiche.

Aus Fig. 6 ist ersichtlich, daß bei geschlossenem Flügel 23 das Federende 24.2 auf der Flügeloberfläche lagert. Wird nun eine bestimmte Durchflußmenge erreicht, öffnet der Flügel 23. Die Feder 24 wird dabei um einen bestimmten Betrag um die Schwenkachse 21 gebogen, d.h., die Länge der Feder 24 auf dem Flügel 23 verkürzt sich. Das Federende 24.2 gelangt dadurch auf die schiefe Ebene 34, auf der sie mit zunehmender Öffnung des Flügels 23 bis auf den Nutenboden 33 entgegen der Strömungsrichtung nach hinten gleitet. Auf diese Weise wird die beim Öffnen des Flügels 23 zunehmende Federkraft reduziert.

Das Flügelrad 11 ist auf seiner stromab liegenden Seite direkt am Umschaltventil-Einsatz 14 gelagert. Die Baulänge der Einheit Hauptzähler-Meßeinsatz 7 und Umschaltventil-Einsatz 14 verringert sich dadurch und insbesondere durch den geringen Platz bedarf des Umschaltventils 18 gegenüber dem Stand der Technik erheblich.

In der Nabe 12 ist eine an sich bekannte elektronische Abtasteinrichtung 15 angeordnet, die über elektrische Leiter 16 mit einem auf dem Gehäusedeckel 6 aufgesetzten, elektronischen Zählwerk 17 verbunden ist. Die Abtasteinrichtung 15 und das elektronische Zählwerk 17 gehören zum Stand der Technik, auf den hiermit Bezug genommen wird, so daß sich weitere Erläuterungen zu diesen Bauteilen erübrigen.

Aufgrund der elektronischen Abtastung der Drehzahl des Woltmann-Flügelrades 11 und dem dadurch bedingten Wegfall mechanischer Übertragungsteile wird im Hauptzähler-Meßeinsatz 7 zwischen dem Gehäusedeckel 6 und dem Meßraum 8 Platz gewonnen, der für die Unterbringung eines Nebenzählers 35 genutzt wird. Dessen Flügelrad 37 (Hauswasserzähler) ist in einer Kartusche 36 mit lotrechter Achsausrichtung gelagert. Seine Drehzahl wird ebenfalls elektronisch erfaßt. Dazu ist dem Flügelrad 37 eine an sich bekannte elektronische Abtasteinrichtung 38 zugeordnet, von der elektrische Leiter 39 zum Zählwerk 17 führen. Das Zählwerk 17 empfängt die Meßsignale sowohl vom Hauptzähler als auch vom Nebenzähler, verarbeitet beide Signale und kann sie einzeln oder als Summe anzeigen.

Die Kartusche 36 des Nebenzählers 35 ist innerhalb einer zylindrischen Begrenzungswand 40 des Hauptzähler-Meßeinsatzes 7 angeordnet, die oben wasserdicht mit dem Deckel 6 und unten wasserdicht mit der Wandung 41 des Meßraums 8 verbunden ist. In der Wandung 40 sowie in der Kartusche 36 sind Einlaßöffnungen 42, 43 bzw. Auslaßöffnungen 44, 45 für den Wasserdurchfluß durch den Nebenzähler vorgesehen.

Die oben beschriebene Anordnung des Nebenzählers 35 im Hauptzähler-Meßeinsetz 7 trägt zur weiteren Kompaktierung des Verbundwasserzählers bei, der wie folgt arbeitet:

Unterhalb des Grenzdurchflusses ist das Umschaltventil 18 geschlossen und die gesamte Wassermenge fließt durch den Bereich oberhalb des Hauptzähler-Meßraums 8. Es strömt durch die Öffnung 42 in der Wandung 40 und die Einlaßöffnung 43 in der Wandung der Kartusche 36 dem Flügelrad 37 zu und strömt dann über die Öffnungen 44 in der Kartusche 36 und 45 in der Wandung 40 in Richtung Zählerausgang. Oberhalb des Grenzdurchflusses ist das Umschaltventil 18 geöffnet und der größere Teil der Wassermenge fließt durch den Meßraum 8, während ein kleinerer Teil wieder den oben beschriebenen Weg über den Nebenzähler 35 nimmt.

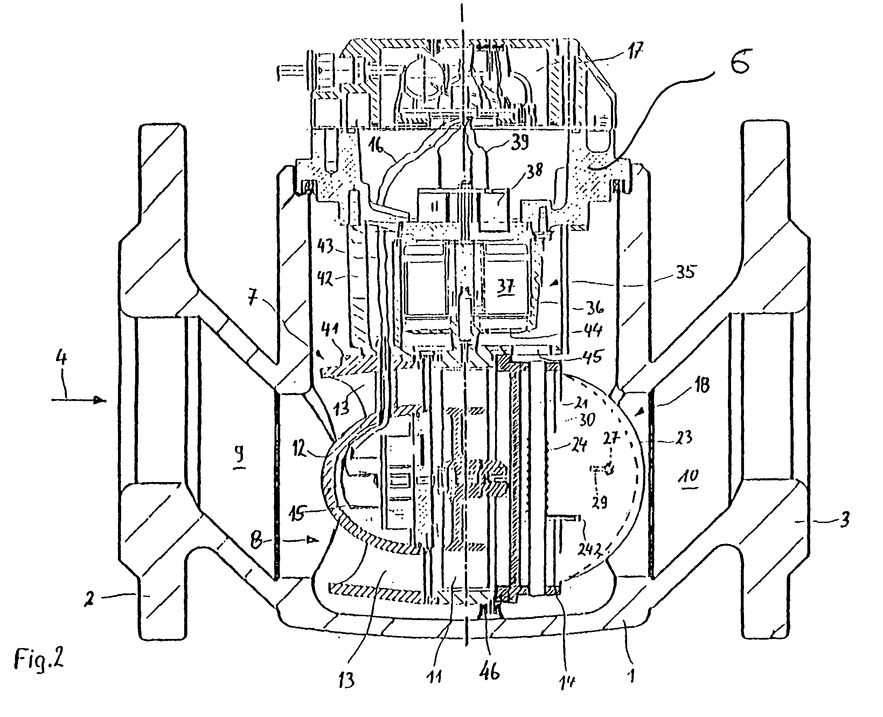

In Fig. 2 ist ein weiteres Ausführungsbeispiel für einen Verbundwasserzähler dargestellt. Die an dem Gehäusedeckel 6 hängende Baugruppe, bestehend aus dem Hauptzähler-Meßeinsatz 7 mit integriertem Nebenzähler 35 und dem Umschaltventil-Einsatz 14 ist in Aufbau und Funktion völlig identisch mit der des vorhergehenden Ausführungsbeispieles. Diese Baugruppe kann als Einheit in das Gehäuse 1 eingesetzt bzw. wieder aus diesem herausgenommen werden. Sie bildet eine selbständige Einheit, die für sich geeicht bzw. beglaubigt werden kann und praktisch in beliebig ausgebildete Gehäuse einsetzbar ist.

Der einzige Unterschied zum Verbundwasserzähler des ersten Ausführungsbeispiels besteht darin, daß das Gehäusemittelteil bis zur Unterkante von Einlaufflansch 2 und Auslaufflansch 3 heruntergezogen ist. Diese Ausbildung hat den wesentlichen Vorteil, daß sich die Bauhöhe des Verbundwasserzählers wesentlich reduziert, was bei einem Vergleich der Darstellungen gemäß Fig. 1 und 2 ganz augenscheinlich wird. Dadurch ergibt sich aber auch ein schräger Verlauf der Wasserführungskanäle 9 und 10 zum Meßraum 8 hin bzw. von diesem weg. Diese Strömungsführung durch das Gehäuse 1 ergibt im Vergleich zur geradlinigen Strömungsführung höhere Druckverluste, die aber verkraftet werden können, da das Umschaltventil 18 selbst nur geringe Druckverluste verursacht. Mit herkömmlichen Umschaltventilen wäre eine derartige Strömungsführung aus Platzbedarfs- und Druckverlustgründen nicht möglich.

## Patentansprüche

1. Verbundwasserzähler, mit einem Hauptzähler-Meßeinsatz (7), in dem ein Flügelrad (11) drehbar gelagert ist, einem wasserdicht mit dem Hauptzähler-Meßeinsatz (7) verbundenen und in Strömungsrichtung (4) hinter diesem angeordneten Umschaltventil-Einsatz (14), **gekennzeichnet durch** die folgenden Merkmale:
- das Flügelrad (11) ist auf seiner stromauf liegenden Seite, in einer an Stegen (13) gehalterten Nabe (12) gelagert;
- im Hohlraum dieser Nabe (12) ist eine elektronische Abtasteinrichtung (15) zur Erfassung der Drehzahl des Flügelrades (11) angeordnet, die über elektrische Leiter (16) mit einem elektronischen Zählwerk (17) verbunden ist;
- das Flügelrad (11) ist auf seiner stromab liegenden Seite an dem Umschaltventil-Einsatz (14) gelagert.

2. Verbundwasserzähler mit einem im Umschaltventil-Einsatz (14) angeordneten Umschaltventil (18), dessen Verschlußglied (22, 23) entgegen der Strömung federbelastet ist und in Schließstellung an einem Ventilsitz (20) anliegt, **dadurch gekennzeichnet, daß** das Verschlußglied (22, 23) als geteilte Klappe ausgebildet ist, dessen beiden Flügel (22, 23) an einer in ihrer Teilungsebene gelagerten Schwenkachse (21) scharnierartig miteinander verbunden sind, wobei die Klappen (22, 23) auf ihrer stromauf liegenden Seite zumindest im konstruktiv bedingt Spalten aufweisenden Bereich der Schwenkachse (21) durch eine Flachdichtung (25) abgedeckt ist.

3. Verbundwasserzähler nach Anspruch 1 oder Anspruch 2, **dadurch gekennzeichnet, daß** ein Nebenzähler (35) oberhalb des Hauptzähler-Meßraums (8) in den Hauptzähler-Meßeinsatz (7) integriert ist.

4. Verbundwasserzähler nach Anspruch 2 und Anspruch 3, **dadurch gekennzeichnet, daß** die Wasserführungskanäle (9, 10) im Zählergehäuse (1) vom Einlaufflansch (2) sowie vom Auslaufflansch (3) zum Meßraum (8) des Hauptzähler-Meßeinsatzes (7) hin nach unten geneigt sind.

5. Verbundwasserzähler nach Anspruch 1 oder Anspruch 2, **dadurch gekennzeichnet, daß** ein Nebenzähler (35) unterhalb des Hauptzähler-Meßraums (8) in den nach unten verlängerten Hauptzähler-Meßeinsatz (7) integriert ist.

6. Verbundwasserzähler nach einem der Ansprüche 3, 4 oder 5, **dadurch gekennzeichnet, daß** dem Nebenzähler (35) ebenfalls eine elektronische Abtasteinrichtung (38) zur Erfassung seiner Drehzahl zugeordnet ist, von der elektrische Leiter (39) zum elektronischen Zählwerk (17) führen.

7. Verbundwasserzähler nach Anspruch 6, **dadurch gekennzeichnet, daß** das elektronische Zählwerk (17) die Meßwerte von Hauptzähler und Nebenzähler (35) einzeln und/oder als Summe anzeigt.

## Claims

1. Compound water meter, with a main meter measuring insert (7), in which an impeller wheel (11) is held as rotatable, a changeover valve insert (14) connected in watertight manner to the main meter measuring insert (7) and arranged behind it in the direction of flow (4), **characterised by** the following features:
- the impeller wheel (11) is held on its upstream side in a hub (12) supported on webs (13),
- in the hollow of this hub (12) is arranged an electronic scanning device (15), which is connected via electrical conductors (16) to an electronic meter (17), for recording the speed of the impeller wheel (11),
- the impeller wheel (11) is held on its downstream side on the changeover valve insert (14).

2. Compound water meter with a changeover valve (18) arranged in the changeover valve insert (14), the closing member of which (22, 23) is spring-loaded against the flow and in the closing position rests against a valve face (20), **characterised in that** the closing member (22, 23) is constructed as a divided shutter, the two wings of which (22, 23) are connected to one another like hinges on a swivel pin (21) held in their joint face, the shutter (22, 23) being covered by a flat seal (25) on its upstream side at least in the area of the swivel pin (21) having gaps conditional on the structure.

3. Compound water meter according to claim 1 or claim 2, **characterised in that** an auxiliary meter (35) is integrated into the main meter measuring insert (7) above the main meter measuring chamber (8).

4. Compound water meter according to claim 2 and claim 3, **characterised in that** the water-conducting channels (9, 10) in the meter housing (1) are inclined downwards from the inlet flange (2) and from the outlet flange (3) towards the measuring chamber (8) of the main meter measuring insert (7).

5. Compound water meter according to claim 1 or claim 2, **characterised in that** an auxiliary meter (35) is integrated into the main meter measuring insert (7), which is lengthened downwards, below the main meter measuring chamber (8).

6. Compound water meter according to one of claims 3, 4 or 5, **characterised in that** the auxiliary meter (35) is likewise assigned an electronic scanning device (38) for recording its speed, from which electrical conductors (39) lead to the electronic meter (17).

7. Compound water meter according to claim 6, **characterised in that** the electronic meter (17) displays the measured values of the main meter and the auxiliary meter (35) individually and/or as a total.

## Revendications

1. Compteur d'eau combiné comprenant une cartouche de mesure (7) du compteur principal, dans laquelle un moulinet de Woltman (11) est logé rotatif, ainsi qu'un insert (14) pour une soupape d'inversion, insert qui est relié de manière étanche avec la cartouche de mesure du compteur principal (7) et disposé derrière celui-ci, dans le sens du courant (4), **caractérisé en ce que** :
- au niveau de sa face située en amont, le moulinet de Woltman (11) est logé dans un moyeu (12) fixé sur des nervures (13) ;
- dans le creux de ce moyeu (12) est disposé un dispositif de détection électronique (15) qui est relié à un totalisateur électronique (17) par l'intermédiaire de conducteurs électriques, pour détecter le nombre de tours du moulinet 11;
- au niveau de sa face située en aval, le moulinet de Woltman (11) est logé sur l'insert de la soupape d'inversion (14).

2. Compteur d'eau combiné avec une soupape d'inversion (18), qui est disposée dans l'insert (14) prévu à cet effet, dont l'élément de fermeture (12, 23) est commandé par ressort dans le sens contraire à celui du courant et, en position de fermeture, adjacent à un siège de soupape (20), **caractérisé en ce que** l'élément de fermeture (22, 23) est conçu comme clapet divisé, dont les deux parties (22, 23) sont reliées l'une à l'autre, à la manière d'une charnière, au niveau d'un axe de pivotement (21) situé sur leur plan de division, le clapet (22, 23) étant, au niveau de sa face situé en amont, recouvert d'une garniture plate au moins dans la zone de l'axe de pivotement (21) qui présente des fentes consécutives à la construction.

3. Compteur d'eau combiné suivant la revendication 1 ou suivant la revendication 2, **caractérisé en ce qu**'un compteur secondaire (35) est intégré dans la cartouche de mesure du compteur principal (7) au-dessus de la chambre de mesure (8) du compteur principal.

4. Compteur d'eau combiné suivant la revendication 2 et suivant la revendication 3, **caractérisé en ce que** les canaux de conduction d'eau (9, 10) dans le boîtier du compteur (1) sont inclinés vers le bas depuis les brides d'entrée (2) et de sortie (3) en direction de la chambre de mesure (8) de la cartouche de mesure (7) du compteur principal.

5. Compteur d'eau combiné suivant la revendication 1 ou suivant la revendication 2, **caractérisé en ce qu**'un compteur secondaire (35) est intégré dans la cartouche de mesure (7) du compteur principal, qui est prolongée vers le bas, au-dessous de la chambre de mesure (8) du compteur principal.

6. Compteur d'eau combiné suivant une des revendications 3, 4 ou 5, **caractérisé en ce** **qu**'un dispositif de détection électronique (38), à partir duquel des conducteurs électriques (39) mènent au totalisateur électronique (17), est également associé au compteur secondaire (35) pour détecter le nombre de tours de celui-ci.

7. Compteur d'eau combiné suivant la revendication 6, **caractérisé en ce que** le totalisateur électronique (17) affiche soit individuellement, soit. sous forme de somme, les valeurs de mesure du compteur principal et du compteur secondaire (35).
